# EUROPÄISCHE PATENTSCHRIFT

(11) **EP 1 248 816 B1**
(45) Veröffentlichungstag und Bekanntmachung des Hinweises auf die Patenterteilung: **24.11.2004**
(21) Anmeldenummer: 00993411.8
(22) Anmeldetag: 13.12.2000
(51) Int. Cl.: C08K 3/40, C03C 14/00, C08J 3/20

(54) **GLAS/KUNSTSTOFF-COMPOUNDS**
GLASS/PLASTIC COMPOUNDS
COMPOSITES VERRE/MATIERE PLASTIQUE

(30) Priorität: 15.12.1999 DE 19960548
(43) Veröffentlichungstag der Anmeldung: 16.10.2002
(73) Patentinhaber: SIEMENS AKTIENGESELLSCHAFT, 80333 München (DE)
(72) Erfinder: GREINER, Robert, 91083 Baiersdorf (DE); KAPITZA, Heinrich, 90765 Fürth (DE); OCHSENKÜHN, Manfred, 92348 Berg (DE); POLESE, Angelo, 10557 Berlin (DE)
(86) Internationale Anmeldenummer: PCT/DE2000/004432
(87) Internationale Veröffentlichungsnummer: WO 2001/044360

(56) Entgegenhaltungen:
- EP-A- 0 365 236
- EP-A- 0 773 196
- DATABASE WPI Section Ch, Week 199826 Derwent Publications Ltd., London, GB; Class A60, AN 1998-291893 XP002164143 & JP 10 101364 A (ASAHI GLASS CO LTD), 21. April 1998 (1998-04-21)

## Beschreibung

Die Erfindung betrifft Glas/Kunststoff-Compounds auf Thermoplastbasis sowie ein Verfahren zu deren Herstellung.

In der Elektrotechnik und Elektronik werden zur Herstellung von Geräten bzw. Bauteilen verstärkte Kunststoffmaterialien eingesetzt, vor allem auf der Basis von Thermoplasten. Als verstärkte Thermoplaste dienen dabei üblicherweise glasfaserhaltige Thermoplast-Compounds. Diese Materialien weisen jedoch - insbesondere bei hohen Füllgraden - ein ungünstiges Verarbeitungsverhalten auf, bedingt durch schlechte Fließfähigkeit und hohen Werkzeugverschleiß. Darüber hinaus sind die mechanischen Eigenschaften - aufgrund einer Orientierung der Glasfasern bei der Verarbeitung - häufig anisotrop. Bei bewegten Teilen, die aus derartigen Materialien hergestellt wurden, kommt es im Betrieb zu einer deutlichen Krümelbildung, was insbesondere bei Geräten der Elektrotechnik zu Beeinträchtigungen der Funktion führt. Außerdem erfolgt beim Materialrecycling glasfaserverstärkter Thermoplaste eine Degradation der Glasfasern. Dies hat eine deutliche Verschlechterung der mechanischen Eigenschaften von mit derartigen Glasfasern hergestellten Compounds zur Folge.

Aus der EP 0 365 236 A1 ist eine Legierung in Form einer Schmelzmischung aus wenigstens einem anorganischen Glas und/oder einer Glaskeramik und wenigstens einem organischen thermoplastischen oder duroplastischen Polymer bekannt; der Anteil des Glases bzw. der Glaskeramik beträgt dabei 30 bis 90 Vol.-%. Die Glaskomponente ist ein Phosphatglas, das beispielsweise folgende Zusammensetzung aufweist (in Mol-%): 44 bis 58 % P₂O₅, 4 bis 10 % Al₂O₃ + B₂O₃ (mit 0 bis 7 % Al₂O₃ und 0 bis 10 % B₂O₃), 10 bis 45 % Li₂O + Na₂O (mit 0 bis 30 % Li₂O und 10 bis 30 % Na₂O), 0 bis 20 % Cu₂O und 10 bis 30 % Li₂O + CuO₂. Das thermoplastische Polymer ist aus folgender Gruppe ausgewählt: Polyaryletherketone, Polyphenylensulfide, Polyfluorharze, Polyetherimide, flüssigkristalline Polyester, Polyethersulfone, Polytetrafluorethylene, Polyetheretherketone, Polyetherketone, Polyethylterephthalate, Polybutylterephthalate, Melamine und Polycarbonate. Das duroplastische Polymer kann ein Epoxidharz, ein Siliconharz, ein Polyimid, ein Phenolformaldehydharz oder ein Diallylphthalat sein.

Zur Verbesserung der Feuchtestabilität von Legierungen der vorstehend genannten Art - und entsprechenden Composites - ist es bekannt, neben dem Matrixmaterial aus thermoplastischem oder duroplastischem Polymer und dem Phosphatglas eine wasserlösliche Stabilisatorkomponente einzusetzen, die eine Quelle für Metallkationen mit einer Wertigkeit von 2+ oder höher darstellt (siehe EP 0 587 082 A1 und EP 0 587 083 A1). Derartige Metallkationen sind Ba²⁺, Mg²⁺, Ca²⁺, Al³⁺, Zn²⁺, Sr²⁺ und Fe³⁺. Durch die Stabilisatorkomponente, die ein Metalloxid oder eine andere Metallverbindung ist, wird aber das Verarbeitungsverhalten bei einem hohen Gehalt an Füllstoff, d.h. Glas, durch eine erhebliche Viskositätssteigerung deutlich verschlechtert.

Für Glas/Kunststoff-Blends sind auch Gläser mit niedriger Glasübergangstemperatur auf der Basis von Alkali-Zink-Pyrophosphaten und -Sulfophosphaten bekannt (siehe: G.H. Beall in "Proceedings of XVII International Congress on Glass", Peking, China, 9. bis 14. Oktober 1995, Seiten 174 bis 183). Die Gläser weisen beispielsweise folgende Zusammensetzung auf (in Mol-%) :
Pyrophosphatgläser: 30 bis 40 % P₂O₅, 20 bis 55 % ZnO, 0 bis 4 % Al₂O₃ und 10 bis 30 % R₂O, d.h. 3 bis 12 % Li₂O, 4 bis 18 % Na₂O, 0 bis 12 % K₂O und 0 bis 17 % Cu₂O; Sulfophosphatgläser: 21 bis 33 % P₂O₅, 9 bis 17 % SO₃, 35 bis 51 % ZnO und 10 bis 20 % R₂O, wobei R₂O für gemischtes Alkali ("mixed alkali") steht.
Diese Gläser finden zusammen mit folgenden thermoplastischen Polymeren Verwendung: Polyetherketone, aromatische flüssigkristalline Polyester, Polyarylsulfone, Perfluoralkoxyharze und Polyetherimide.

Glas/Kunststoff-Compounds, insbesondere solche auf Thermoplastbasis, die zur Herstellung glasverstärkter Kunststoffteile bzw. -strukturen eingesetzt werden, sollen ein spezielles Eigenschaftsprofil aufweisen. Für die Materialeigenschaften bzw. die Eigenschaften der Kunststoffteile gilt folgendes:
- homogene Füllstoffverteilung
- Dimensionsstabilität
- Lötbadbeständigkeit (SMD-Fähigkeit)
- Miniaturisierbarkeit der Glasstrukturen bis in den µ-Bereich
- gute Chemikalienbeständigkeit, d.h. Beständigkeit gegen Wasser, Säuren und Basen
- intrinsische Flammwidrigkeit
- gute Kriechstromfestigkeit
- hohe Wiederverwertbarkeit bzw. Wiederverarbeitbarkeit.

Hinsichtlich der Verarbeitung sind folgende Forderungen zu erfüllen:
- möglichst niedrige Verarbeitungstemperatur (wegen der Forderung nach Lötbadbeständigkeit liegt die Verarbeitungstemperatur allerdings zwangsläufig oberhalb 260°C)
- aufeinander abgestimmte Viskosität der Komponenten Kunststoff, d.h. Thermoplast, und Glas (bei Verarbeitungsbedingungen)
- gute Fließfähigkeit bei hohen Füllgraden
- Möglichkeit der Steuerung der Glasstrukturen (isotrop bzw. anisotrop)
- geringer Werkzeugverschleiß (durch günstige abrasive Eigenschaften).

Ein weiteres Kriterium ist ein krümelarmer Betrieb, d.h. ein geringer Abrieb, insbesondere bei bewegten Teilen. Für die Möglichkeit eines Materialrecycling wird außerdem ein Recycling ohne Schädigung des Verstärkungsmaterials, d.h. der Glaskomponente, gefordert. Ferner sollen die Glas/Kunststoff-Compounds möglichst wirtschaftlich und kostengünstig hergestellt werden können.

Beim Einsatz von Gläsern in der Elektrotechnik und Elektronik ist eine gute Feuchtebeständigkeit von entscheidender Bedeutung. Bekannte Gläser mit niedriger Glasübergangstemperatur, d.h. etwa 220 bis 230°C, sind aber hydrolyseempfindlich und teilweise wasserlöslich. Durch den Zusatz von Kupferoxid (Cu₂O) sollen sich zwar prinzipiell hydrolysebeständigere Gläser mit einer Glasübergangstemperatur von ca. 230 bis 250°C realisieren lassen, derartige Gläser sind jedoch immer noch deutlich hydrolyseempfindlicher als Gläser mit hoher Glasübergangstemperatur (siehe: G.H. Beall, a.a.O.); außerdem ist die technische Herstellung zu kompliziert und zu teuer. Gläser mit einer Glasübergangstemperatur T_{g} > 300°C andererseits sind für den angegebenen Zweck nicht brauchbar. Da die Gläser nämlich erst bei einer Temperatur von 70 bis 80°C oberhalb der Glasübergangstemperatur ausreichend fließfähig sind, ist die Verarbeitung zusammen mit einem Thermoplast erst bei Temperaturen oberhalb 370 bis 380°C möglich.

Aufgabe der Erfindung ist es, Glas/Kunststoff-Compounds auf der Basis von Thermoplasten anzugeben, welche die an derartige Compounds gestellten Eigenschaftsanforderungen sowie die Forderungen hinsichtlich Verarbeitung, Betrieb und Materialrecycling weitestgehend erfüllen. Das Glas soll dabei insbesondere eine höhere Fließfähigkeit und Hydrolysebeständigkeit aufweisen, und außerdem soll eine Feinverteilung des Glases (< 10 µm) bei beliebiger Konzentration möglich sein.

Dies wird erfindungsgemäß durch Glas/Kunststoff-Compounds erreicht, die folgende Komponenten enthalten:
- ein niedrigschmelzendes Sulfophosphatglas folgender Zusammensetzung (in Mol-%): 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃ sowie
- einen Hochleistungsthermoplast.

Unter einem "niedrigschmelzenden" Sulfophosphatglas wird ein Glas mit niedriger Glasübergangstemperatur T_{g} verstanden, insbesondere ein Glas mit T_{g} < ca. 500°C. Ein "Hochleistungsthermoplast" ist ein Hochleistungskunststoff ("high-performance polymer"), und zwar im vorliegenden Fall ein hochtemperaturbeständiger Kunststoff ("heat-resistant polymer", "high-temperature resistant polymer"). Dies ist deshalb wichtig, weil sowohl die Temperatur bei der Herstellung der Compounds als auch die Verarbeitungstemperatur (der Compounds) > 300°C beträgt.

Die Glas/Kunststoff- bzw. Glas/Polymer-Compounds nach der Erfindung weisen gute mechanische und thermische Eigenschaften sowie gute Verarbeitungseigenschaften auf, insbesondere eine gute Fließfähigkeit, auch bei hohem Füllstoff-, d.h. hohem Glasgehalt. Sie zeichnen sich außerdem durch eine hervorragende Chemikalienbeständigkeit aus, insbesondere gegenüber Wasser, Säuren und Basen, und zwar überraschenderweise ohne den Zusatz von Stabilisatoren. Die Glas/Kunststoff-Compounds besitzen ferner eine ausgezeichnete Abriebfestigkeit, und ein Materialrecycling ist problemlos möglich, weil keine Verkürzung der Glaskomponente erfolgt, wie dies bei glasfaserverstärkten Compounds der Fall ist. Im Vergleich mit bekannten Compounds bzw. Blends (siehe: G.H. Beall, a.a.O.) ergibt sich der Vorteil, daß die Glaskomponente kein SrO und kein Al₂O₃ enthält. Strontium ist nämlich relativ teuer, und die Auflösung von Aluminiumoxid im Glas ist im technischen Maßstab zu kompliziert. Die Compounds nach der Erfindung sind dagegen technisch ausgereift und im Tonnenmaßstab herstellbar.

Die in den Glas/Kunststoff-Compounds nach der Erfindung enthaltenen Sulfophosphatgläser weisen eine Glasübergangstemperatur von 250°C ≤ T_{g} ≤ 280°C auf. Vorzugsweise findet in den Compounds ein Sulfophosphatglas folgender Zusammensetzung (in Mol-%) Verwendung: 4,9 % Li₂O, 9,4 % Na₂O, 7,1 % K₂O, 1,6 % CaO, 36,6 % ZnO, 20,0 % P₂O₅ und 20,4 % SO₃. Ein derartiges Glas besitzt eine Glasübergangstemperatur von 268°C. Ein anderes Glas weist beispielsweise folgende Zusammensetzung auf (in Mol-%) : 9 % Li₂O, 5 % Na₂O, 7 % K₂O, 1,6 % CaO, 37 % ZnO, 20,4 % P₂O₅ und 20 % SO₃ (T_{g} = 280°C). Ein weiteres Glas hat beispielsweise folgende Zusammensetzung (in Mol-%): 4,8 % Li₂O, 9,2 % Na₂O, 6,9 % K₂O, 1,6 % CaO, 35,9 % ZnO, 2,0 % La₂O₃, 19,6 % P₂O₅ und 20,0 % SO₃ (T_{g} = 275°C).

Als Hochleistungsthermoplast dient ein Polyetheretherketon (PEEK), ein Polyetherimid (PEI), ein Polyphenylensulfid (PPS), ein teilaromtisches Polyamid, wie Polyphthalamid (PPA), oder ein flüssigkristallines Polymer (LCP). Bei diesen Polymeren ist die Glasübergangstemperatur der Glaskomponente der Verarbeitungstemperatur des Thermoplastmaterials angepasst. Weitere einsetzbare Hochleistungsthermoplaste sind Polyaryletherketone (PAEK) allgemein, beispielsweise Polyetherketone (PEK), sowie Polysulfone (PSU), insbesondere Polyethersulfone (PES) und Polyphenylensulfone (PPSU).

Der Anteil der Glas/Kunststoff-Compounds an der Glaskomponente, d.h. am Sulfophosphatglas, beträgt vorzugsweise 15 bis 60 Gew.-%. Für bestimmte Anwendungen kann der Glasanteil aber bis zu 80 Gew.-% betragen. Die Compounds können auch übliche Additive enthalten, wie Farbpigmente und Stabilisatoren. Anwendungsmöglichkeiten bestehen beispielsweise bei Sensoren, Aktoren, Steckverbindern, elektrooptischen Bauteilen und Relais.

Die Herstellung der Glas/Kunststoff-Compounds nach der Erfindung erfolgt in der Weise, dass aus den beiden Komponenten, d.h. Sulfophosphatglas und Hochleistungsthermoplast, zunächst - bei erhöhter Temperatur - ein Masterbatch mit einem Glasgehalt von 60 bis 90 Gew.-% hergestellt wird. Dabei wurde überraschenderweise gefunden, dass bei der Verwendung von Glaspartikeln (Glaskörner) mit einem Durchmesser ≤ 1,5 mm im Masterbatch Glasstrukturen im µm- und sub-µm-Bereich erhalten werden, die gleichmäßig verteilt sind.

Die Weiterverarbeitung erfolgt dann in der Weise, dass durch Zugabe von weiterem Hochleistungsthermoplast zum Masterbatch - bei erhöhter Temperatur - der Glasgehalt auf 15 bis 60 Gew.-% verringert wird. Die Struktur und die homogene Verteilung der Glaspartikel werden dabei nicht beeinflusst, d.h. sie bleiben erhalten. Bei Kontrollexperimenten zeigte sich überraschenderweise, dass Strukturgröße und -verteilung der beschriebenen Art nicht erhalten werden, wenn unmittelbar von einem Batch beispielsweise mit einem Glasanteil von 15 % ausgegangen wird. Gleichmäßig verteilte Glasstrukturen, sogar im nm-Bereich, lassen sich vielmehr nur ausgehend von einem Masterbatch mit einem hohen Anteil des speziellen Sulfophosphatglases in einem Hochleistungsthermoplast realisieren.

Die Glas/Kunststoff-Compounds nach der Erfindung werden bei erhöhter Temperatur hergestellt, vorzugsweise bei etwa 320 bis 420°C. Bei der Herstellung der Compounds ist es auch möglich, die Struktur der Glaspartikel (isotrop/anisotrop) durch die Verarbeitungsbedingungen einzustellen. Die Compounds zeichnen sich außerdem durch eine gute Anbindung der Glaskomponente an das Thermoplastmaterial aus, wie insbesondere die gute Chemikalienbeständigkeit zeigt.

Die gute Anbindung der Glaskomponente wird unter anderem dadurch erreicht, dass das Glas mit dem Thermoplastmaterial in geschmolzenem Zustand in Kontakt kommt und daher zum Kontaktzeitpunkt über freie und aktive polare Endgruppen an seiner Oberfläche verfügt, die noch nicht durch Hydroxygruppen etwa aus dem in der Luft enthaltenem Wasser abgesättigt sind. Diese reaktiven Endgruppen treten in Wechselwirkung mit der Oberfläche des Thermoplasten, mit dem sie in Berührung kommen und bewirken dadurch eine besonders stabile Anbindung der beiden Materialien Glas und Thermoplast aneinander.

Da von relativ groben Partikeln eines Sulfophosphatglases ausgegangen werden kann, die Partikelgröße beträgt ≤ 4 mm, vorzugsweise ≤ 1,5 mm, bietet das Verfahren nach der Erfindung somit die Möglichkeit, auch solche Glas/Kunststoff-Compounds preisgünstig herzustellen, bei denen die Glaspartikel in einem Hochleistungsthermoplast gleichmäßig und homogen verteilt sind und außerdem bis in den nm-Bereich gezielt eingestellt werden können. Dies erfolgt über die Viskosität der Einzelkomponenten und über die Verarbeitungsbedingungen, insbesondere die Verarbeitungstemperatur; das Viskositätsverhältnis von Kunststoff zu Glas beträgt im allgemeinen etwa 1:1000. Derartige Compounds eignen sich insbesondere zur Herstellung von Geräten und Bauteilen für die Elektrotechnik bzw. Elektronik. Dabei werden nämlich die wesentlichen Anforderungen bezüglich der Material- und Verarbeitungseigenschaften abgedeckt und es wird ein störungsfreier Betrieb gewährleistet. Die Compounds ermöglichen bei Geräten und Bauteilen der Elektrotechnik bzw. Elektronik außerdem eine deutliche Reduzierung der Materialvielfalt, insbesondere bei den Kunststoffen, bis hin zur Sortenreinheit. Dies ermöglicht ein kostengünstiges Materialrecycling, und zwar unter Erhalt der Füllstoffeigenschaften.

Bei Bauteilen und Komponenten werden heutzutage für die verschiedenartigen Bauelemente unterschiedliche Thermoplaste mit verschiedenen Füll- und Verstärkungsstoffen eingesetzt, noch dazu in unterschiedlichen Anteilen. Dies soll am Beispiel eines sogenannten "schmalen Netzrelais" (SNR) näher erläutert werden.

Bei einem derartigen Relais besteht der Betätiger aus einem flüssigkristallinen Polymer (LCP) mit 30 Gew.-% Glasfaserverstärkung, der Grundkörper aus einem Polyphthalamid (PPA) mit 25 Gew.-% Glasfaser- und 25 Gew.-% Mineralverstärkung, der Spulenkörper ebenfalls aus Polyphthalamid, und zwar mit 45 Gew.-% Glasfaserverstärkung, und die Kappe aus einem Polybutylenterephthalat (PBT) mit 15 Gew.-% Glasfaserverstärkung. Hinzu kommt noch, dass das Polyphthalamid für Grund- und Spulenkörper eine halogenhaltige Brandschutzausrüstung besitzt.

Eine vergleichbare Materialvielfalt findet man beispielsweise auch bei Sensoren, Aktoren, Halbleiterbauteilen und Steckverbindern. Die Kleinheit der Bauelemente, zusammen mit der Sortenvielfalt der eingesetzten Werkstoffe und dem Halogenbrandschutz, machen die Wiederverwertbarkeit von Bauteilen und Komponenten nahezu unmöglich, und außerdem ist dies sehr kostspielig. Wie bereits ausgeführt, kommt es ferner bei der Wiederaufbereitung und Wiederverarbeitung von glasfaserverstärkten Materialien zu einer starken Kürzung der Glasfasern. Dies hat einen deutlich negativen Einfluss auf die mechanischen und thermischen Eigenschaften des wiederverwendeten Materials.

Durch den Einsatz der Glas/Kunststoff-Compounds nach der Erfindung, die ein niedrigschmelzendes Sulfophosphatglas und einen Hochleistungsthermoplast enthalten, können die genannten Probleme gelöst werden. Der Hochleistungsthermoplast ist dabei insbesondere Polyphenylensulfid (PPS), Polyetheretherketon (PEEK), Polyetherimid (PEI), Polysulfon (PSU), Polyethersulfon (PES) oder teilaromatisches Polyamid, wie Polyphthalamid (PPA). Die Glaskomponente ist auf den jeweiligen Kunststoff abgestimmt und besitzt eine Glasübergangstemperatur im Bereich von 250 bis 280°C. Bei der Verarbeitungstemperatur der Compounds, die etwa 320 bis 420°C beträgt, liegt die Glaskomponente im fließfähigen Zustand vor. Der Anteil der Glaskomponente im Compound beläuft sich auf 15 bis 80 Gew.-%, vorzugsweise 15 bis 60 Gew.-%.

Da die Glaskomponente bei der Verarbeitungstemperatur im fließfähigen Zustand vorliegt, zeigen die Compounds - trotz des hohen Glasanteils - ein sehr gutes Fließverhalten, und es können Bauteile mit komplizierter Geometrie und dünnen Wandstärken realisiert werden. Durch Abstimmung der Viskosität von Thermoplast und Glas und durch eine geeignete konstruktive Bauteilauslegung können im Bauteil auch gezielt faseroder kugelförmige Glasstrukturen erzeugt werden. Damit ist die Möglichkeit gegeben, in mechanisch beanspruchten Zonen eines Bauteils eine Faserverstärkung vorzusehen und gleichzeitig in Zonen, die einer hohen Maßhaltigkeit genügen müssen, eine Kugelstruktur zu realisieren, die ein isotropes Materialverhalten sicherstellt.

Im Falle eines schmalen Netzrelais können alle vier Einzelkomponenten aus der gleichen Thermoplastbasis, beispielsweise Polyphenylensulfid, mit unterschiedlichen Glasanteilen gefertigt werden, welche die Anforderungen hinsichtlich der mechanischen, thermischen und elektrischen Verarbeitungseigenschaften erfüllen. Außerdem ist von Bedeutung, dass diese Komponenten halogenfrei flammwidrig sind.

Da die bei der Verarbeitung erzeugten Glasfasern bzw. -kugeln bei einer Wiederverarbeitung jeweils neu aufgeschmolzen und damit neu erzeugt werden, kann es - im Gegensatz zu herkömmlichen Glasfasern - nicht zu einer Kürzung der Fasern kommen. Das wiederverwendete Material hat somit die gleichen mechanischen und thermischen Eigenschaften wie Neuware. Der gesamte Kunststoffanteil des Netzrelais kann auf einfache und kostengünstige Weise wiederaufbereitet und -verwertet werden. Als Recyclat erhält man einen Compound, dessen Glasanteil sich anteilig aus den Glasanteilen der Einzelkomponenten zusammensetzt. Bei der Wiederaufbereitung kann dann problemlos Kunststoffrohmaterial bzw. niedrigschmelzendes Glas zudosiert werden, um im Recyclat einen gewünschten Glasanteil einzustellen.

Die Glas/Kunststoff-Compounds nach der Erfindung eignen sich somit in hervorragender Weise für halogenfrei flammwidrige, sortenreine Bauteile und Komponenten für die Elektrotechnik und Elektronik, wobei eine hohe Wiederverwertbarkeit gegeben ist. Bei Bauelementen wird dabei für alle Einzelkomponenten die gleiche Thermoplastbasis verwendet, die mit verschiedenen Anteilen eines niedrigschmelzenden Glases versetzt sein kann. Das aus derartigen Einzelkomponenten aufgebaute Bauteil ist einfach und kostengünstig wiederverwertbar.

Anhand von Ausführungsbeispielen soll die Erfindung noch näher erläutert werden. Das dabei verwendete Sulfophosphatglas weist folgende Zusammensetzung auf (in Mol-%): 4,9 % Li₂O, 9,4 % Na₂O, 7,1 % K₂O, 1,6 % CaO, 36,6 % ZnO, 20,0 % P₂O₅ und 20,4 % SO₃.

### Beispiel 1

### Herstellung eines Masterbatch

Die Masterbatch-Herstellung erfolgt bevorzugt auf einem gleichlaufenden oder auch auf einem gegenläufigen Doppelschneckenextruder mit 11 separaten Zylinderheizzonen (Zylinderzone 1: Einfülltrichter; Zylinderzone 11: Düse). Die Schnecken sind derart konzipiert, dass in den Zylinderheizzonen 3 bis 5 mehrere Knet- und Scherblöcke sowie Stauscheiben eingebaut sind. Die Zonen 6 bis 9 sind mit Dispergierelementen bestückt, die Zonen 10 und 11 enthalten Förderelemente.

Die verwendeten Kunststoffe liegen entweder in Pulver- oder in Granulatform vor (Linsengranulat oder Zylindergranulat mit einer Länge von 3 bis 4 mm und einem Durchmesser von 2 bis 5 mm); das Glas hat eine Körnung von ≤ 1,5 mm. Bei der Verwendung von Kunststoffpulver wird zunächst eine Trockenmischung (Vormischung) im entsprechenden Verhältnis von Glas (60 bis 90 %) zu Kunststoff (40 bis 10 %) aufbereitet, die dann in die Hauptdosierung (Einfülltrichter) des Extruders dosiert wird. Bei der Verwendung von Kunststoffgranulat werden beide Komponenten über Dosiersysteme anteilsmäßig in den Einfülltrichter dosiert. In dieser Weise kann auch bei der Verwendung von Kunststoffpulver vorgegangen werden. Weiterhin besteht die Möglichkeit, das Kunststoffpulver bzw. -granulat in den Einfülltrichter des Extruders zu dosieren und das Glas über eine Seitendosierung in den Zylinderzonen 3 bis 5. Sowohl das Glas als auch der Kunststoff bzw. die Trockenmischung werden vor der Verarbeitung mindestens 4 h bei 100 bis 150°C gut vorgetrocknet. Der Compound wird durch eine Lochdüse ausgetragen, in einem sich anschließenden Wasserbad abgekühlt und dann in einem Granulator zerkleinert. Bei sehr hohen Glasanteilen empfiehlt sich die Verwendung eines Heißabschlages.
(a) Herstellung eines Masterbatch auf der Basis von PPS-Pulver; Glasanteil: 70 Gew.-%

| Zylindertemperaturprofil: | | | | | | |
|---|---|---|---|---|---|---|
| Zylinderzonen | 1 | 2 | 3-5 | 6-9 | 10 | 11 |
| | 100 | 300 | 335 | 330 | 330 | 330°C |
| Schneckendrehzahl | 65 U/min | | | | | |

Bei einem derartigen Temperaturprofil wird an der Düse (Zylinderzone 11) eine Massetemperatur von ca. 345°C gemessen. Die Glaspartikel im Masterbatch haben eine Größe von ≤ 10 µm und sind homogen verteilt.
(b) Herstellung eines Masterbatch auf der Basis von PEEK-Pulver; Glasanteil: 65 Gew.-%

| Zylindertemperaturprofil: | | | | | | |
|---|---|---|---|---|---|---|
| Zylinderzonen | 1 | 2 | 3-5 | 6-9 | 10 | 11 |
| | 100 | 350 | 375 | 370 | 370 | 370°C |
| Schneckendrehzahl | 60 U/min | | | | | |

Bei einem derartigen Temperaturprofil wird an der Düse (Zylinderzone 11) eine Massetemperatur von ca. 395°C gemessen. Die Glaspartikel im Masterbatch haben eine Größe von ≤ 5 µm und sind homogen verteilt.
(c) Herstellung eines Masterbatch auf der Basis von PEI-Granulat; Glasanteil: 60 Gew.-%

| Zylindertemperaturprofil: | | | | | | |
|---|---|---|---|---|---|---|
| Zylinderzonen | 1 | 2 | 3-5 | 6-9 | 10 | 11 |
| | 100 | 350 | 385 | 375 | 375 | 375°C |
| Schneckendrehzahl | 60 U/min | | | | | |

Bei einem derartigen Temperaturprofil wird an der Düse (Zylinderzone 11) eine Massetemperatur von ca. 400°C gemessen. Die Glaspartikel im Masterbatch haben eine Größe von ≤ 1 µm und sind homogen verteilt.

### Beispiel 2

Verringerung des Glasgehaltes im Masterbatch nach Beispiel 1

Die Verringerung des Glasgehaltes im Masterbatch erfolgt auf dem beschriebenen Doppelschneckenextruder (siehe Beispiel 1). Der endgültige Glasgehalt von 15 bis 60 Gew.-% kann auf zweierlei Weise eingestellt werden:
(i) Masterbatch-Granulat und Basismaterial werden anteilmäßig abgewogen, entsprechend dem einzustellenden endgültigen Glasgehalt, und in einer Trockenmischung aufbereitet. Diese Trockenmischung wird in den Einfülltrichter des Extruders dosiert. Die Herstellung des endgültigen Compounds erfolgt somit in einem zweiten Extruderdurchlauf.
(ii) Die Herstellung erfolgt im gleichen Extruderdurchlauf zusammen mit der Masterbatch-Herstellung, indem über einen zweiten Seitendosierer in den Zylinderzonen 6 bis 9 Basismaterial - entsprechend dem einzustellenden Glasanteil - zudosiert wird. Zur Herstellung des endgültigen Compounds ist somit nur ein Extruderdurchlauf erforderlich.

Die Variante (ii) wird dabei bevorzugt, weil die Materialien nur einmal der Temperaturbelastung im Aufbereitungsprozess ausgesetzt sind und damit ein übermäßiger molekularer Abbau des Basismaterials vermieden wird.

Bei der Variante (i) liegt das Zylindertemperaturprofil in den Zonen 3 bis 11 jeweils etwa um 15 bis 20°C unter dem entsprechenden Temperaturprofil nach Beispiel 1.
(a) Verringerung des Glasgehaltes im Masterbatch auf der Basis von PPS-Pulver mit einem Glasanteil von 70 Gew.-% zur Herstellung eines Compounds mit 25 Gew.-% Glasanteil nach Variante (i)

| Zylindertemperaturprofil: | | | | | | |
|---|---|---|---|---|---|---|
| Zylinderzonen | 1 | 2 | 3-5 | 6-9 | 10 | 11 |
| | 100 | 300 | 320 | 315 | 315 | 315°C |
| Schneckendrehzahl | 63 U/min | | | | | |

Bei einem derartigen Temperaturprofil wird an der Düse (Zylinderzone 11) eine Massetemperatur von ca. 330°C gemessen. Die Glaspartikel im Compound haben eine Größe von ≤ 10 µm und sind homogen verteilt.
(b) Verringerung des Glasgehaltes im Masterbatch auf der Basis von PEEK-Pulver mit einem Glasanteil von 65 Gew.-% zur Herstellung eines Compounds mit 40 Gew.-% Glasanteil nach Variante (ii)

| Zylindertemperaturprofil: | | | | | | |
|---|---|---|---|---|---|---|
| Zylinderzonen | 1 | 2 | 3-5 | 6-9 | 10 | 11 |
| | 100 | 350 | 375 | 370 | 370 | 370°C |
| Schneckendrehzahl | 60 U/min | | | | | |

Bei einem derartigen Temperaturprofil wird an der Düse (Zylinderzone 11) eine Massetemperatur von ca. 390°C gemessen. Die Glaspartikel im Compound haben eine Größe von ≤ 5 µm und sind homogen verteilt.

### Beispiel 3

### Chemikalienbeständigkeit

(a) Hydrolysebeständigkeit
Zur Überprüfung der Hydrolysebeständigkeit des reinen Glases wird das Glas in destilliertem Wasser 21 Tage bei Raumtemperatur gelagert, und dann wird der pH-Wert mittels Lackmuspapier ermittelt.
Ergebnis: pH-Wert = 7, d.h. neutrales Verhalten.
Die gleiche Glasprobe wird anschließend in destilliertem Wasser 5 Tage bei 80°C gelagert, und dann wird der pH-Wert mittels Lackmuspapier ermittelt.
Ergebnis: pH-Wert = 7, d.h. neutrales Verhalten.
(b) Chemikalienbeständigkeit eines Compounds auf der Basis von PEEK-Pulver mit einem Glasanteil von 40 Gew.-%
Probekörper aus diesem Compound werden bei Raumtemperatur in destilliertem Wasser, 1 %iger HCl und 1 %iger NaOH gelagert, und dann wird die Gewichtszunahme bzw. -abnahme nach verschiedenen Lagerungszeiten gemessen und die prozentuale Gewichtszunahme bzw. -abnahme berechnet. Referenzwert ist das entsprechende Probengewicht vor Lagerungsbeginn. Vor Beginn der Messung und der Lagerung werden die Proben 4 h bei 150°C vorgetrocknet.

| Medium | Material | 24 h | 100 h | 400 h | 1000 h |
|---|---|---|---|---|---|
| H₂O dest. | PEEK | 0,09 % | 0,14 % | 0,26 % | 0,34 % |
| | PEEK + 40 % Glas | 0,03 % | 0,12 % | 0,34 % | 0,56 % |
| 1 % HCl | PEEK | 0,08 % | 0,13 % | 0,23 % | 0,32 % |
| | PEEK + 40 % Glas | -0,23 % | -0,28 % | -0,21 % | -0,01 % |
| 1 % NaOH | PEEK | 0,09 % | 0,14 % | 0,25 % | 0,33 % |
| | PEEK + 40 % Glas | -0,16 % | -0,16 % | -0,03 % | 0,14 % |

(c) Chemikalienbeständigkeit eines Compounds auf der Basis von PPS-Pulver mit einem Glasanteil von 40 Gew.-%
Probekörper aus diesem Compound werden bei Raumtemperatur in destilliertem Wasser, 1 %iger HCl und 1 %iger NaOH gelagert, und dann wird die Gewichtszunahme bzw. -abnahme nach verschiedenen Lagerungszeiten gemessen und die prozentuale Gewichtszunahme bzw. -abnahme berechnet. Referenzwert ist das entsprechende Probengewicht vor Lagerungsbeginn. Vor Beginn der Messung und der Lagerung werden die Proben 4 h bei 150°C vorgetrocknet.

| Medium | Material | 24 h | 120 h | 456 h | 648 h |
|---|---|---|---|---|---|
| H₂O dest. | PPS | 0,005 % | 0,014 % | 0,03 % | 0,035 % |
| | PPS + 40 % Glas | 0,037 % | 0,063 % | 0,16 % | 0,21 % |
| 1 % HCl | PPS | 0,009 % | 0,014 % | 0,028 % | 0,030 % |
| | PPS + 40 % Glas | -0,13 % | -0,10 % | -0,02 % | 0,007 % |
| 1 % NaOH | PPS | 0,005 % | 0,014 % | 0,030 % | 0,033 % |
| | PPS + 40 % Glas | -0,075 % | -0,05 % | 0,025 % | 0,075 % |

### Beispiel 4

### Reibung und Verschleiß

Das Reibungs- und Verschleißverhalten wird in einer Stift/Scheibe-Anordnung geprüft.

| Versuchsparameter: | |
|---|---|
| Reibscheibe | Stahl |
| Oberflächenrauhigkeit der Reibscheibe | 0,8 µm |
| Flächenpressung | 4 N/mm² |
| Reibgeschwindigkeit | 0,5 m/s |
| Temperatur | 23°C |

Bestimmt werden Verschleiß (in µm) und Reibkoeffizient an spritzgegossenen Probekörpern (Grundfläche 10 mm x 4 mm), die aus einem Schulterstab entnommen wurden. Nach Ablauf der Einlaufphase beträgt die Versuchsdauer 15 h. Verglichen werden ein Compound auf der Basis von PPS mit 40 Gew.-% Glasanteil und ein entsprechender Compound mit einem Glasanteil von 60 Gew.-% mit einem handelsüblichen PPS mit 40 Gew.-% Glasfasern (PPS Gf 40).

| Material | Verschleiß in 15 h µm | Reibkoeffizient |
|---|---|---|
| PPS Gf 40 | 950 | 0,32 |
| PPS + 40 % Glas | 140 | 0,32 |
| PPS + 60 % Glas | 20 | 0,30 |

## Patentansprüche

1. Glas/Kunststoff-Compounds auf Thermoplastbasis, zumindest umfassend
- ein Sulfophosphatglas mit einer Glasübergangstemperatur T_{g} < ca. 500°C folgender Zusammensetzung: 4 bis 10 % Li₂O, 4 bis 10 % Na₂O, 4 bis 8 % K₂O, 1 bis 2% CaO, 35 bis 37 % ZnO, 0 bis 3 % La₂O₃, 19 bis 22 % P₂O₅ und 19 bis 22 % SO₃ sowie
- einen Hochleistungsthermoplasten, wie Polyetherether-keton (PEEK), Polyetherimid (PEI), Polyphenylen-sulfid (PPS), teilaromatischen Polyamid, flüssigkristallines Polymer(LCP), Polyaryletherketon (PAEK), Polyetherketon oder Polysulfon (PSU), Polyethersulfon (PES) und Polyphenylsulfon (PPSU).

2. Glas/Kunststoff-Compounds nach Anspruch 1, **dadurch gekennzeichnet, dass** sie ein Sulfophosphatglas folgender Zusammensetzung enthalten: 4,9 % Li₂O, 9,4 % Na₂O, 7,1 % K₂O, 1,6 % CaO, 36,6 % ZnO, 20,0 % P₂O₅ und 20,4 % SO₃.

3. Glas/Kunststoff-Compounds nach Anspruch 1 oder 2, **dadurch gekennzeichnet, dass** der Hochleistungsthermoplast ein Polyetheretherketon, ein Polyetherimid, ein Polyphenylensulfid, ein teilaromatisches Polyamid oder ein flüssigkristallines Polymer ist.

4. Glas/Kunststoff-Compounds nach einem der Ansprüche 1 bis 3, **dadurch gekennzeichnet, dass** der Anteil an Sulfophosphatglas 15 bis 60 Gew.-% beträgt.

5. Verfahren zur Herstellung von Glas/Kunststoff-Compounds nach einem oder mehreren der Ansprüche 1 bis 4, **dadurch gekennzeichnet, dass** in einem ersten Schritt aus einem Sulfophosphatglas und einem Hochleistungsthermoplast bei 320°C bis 420°C ein Masterbatch mit einem Gehalt an Glas von 60 bis 90 Gew.-% hergestellt wird, und dass in einem zweiten Schritt der Glasgehalt durch Zugabe von weiterem Hochleistungsthermoplast bei erhöhter Temperatur auf 15 bis 80 Gew.-% verringert wird.

6. Verfahren nach Anspruch 5, **dadurch gekennzeichnet, dass** die Temperatur 320 bis 420°C beträgt.

7. Verfahren nach Anspruch 5 oder 6, **dadurch gekennzeichnet, dass** Glaspartikel mit einem Durchmesser ≤ 4 mm eingesetzt werden.

8. Verwendung der Glas/Kunststoff-Compounds nach einem oder mehreren der Ansprüche 1 bis 4 in Bauteilen und Komponenten für Bauelemente.

9. Elektrisches und/oder elektronisches Bauteil, das einen Glas/Kunststoff-Compound mit einem niedrigschmelzenden Sulfophosphatglas der Zusammensetzung: 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃ sowie einen Hochleistungsthermoplasten umfasst.

## Claims

1. Glass/plastic compounds based on thermoplastics, at least encompassing
- a sulphophosphate glass with a glass transition temperature T_{g} < about 500°C and having the following composition: from 4 to 10% of Li₂O, from 4 to 10% of Na₂O, from 4 to 8% of K₂O, from 1 to 2% of CaO, from 35 to 37% of ZnO, from 0 to 3% of La₂O₃, from 19 to 22% of P₂O₅, and from 19 to 22% of SO₃, and also encompassing
- a high-performance thermoplastic, such as polyether ether ketone (PEEK), polyetherimide (PEI), polyphenylene sulphide (PPS), partly aromatic polyamide, liquid-crystalline polymer (LCP), polyaryl ether ketone (PAEK), polyether ketone, or polysulphone (PSU), polyether sulphone (PES) and polyphenyl sulphone (PPSU).

2. Glass/plastic compounds according to Claim 1, **characterized in that** it comprises a sulphophosphate glass of the following composition: 4.9% of Li₂O, 9.4% of Na₂O, 7.1% of K₂O, 1.6% of CaO, 36.6% of ZnO, 20.0% of P₂O₅, and 20.4% of SO₃.

3. Glass/plastic compounds according to Claim 1 or 2, **characterized in that** the high-performance thermoplastic is a polyether ether ketone, a polyetherimide, a polyphenylene sulphide, a partly aromatic polyamide, or a liquid-crystalline polymer.

4. Glass/plastic compounds according to any of Claims 1 to 3, **characterized in that** the sulphophosphate glass content is from 15 to 60% by weight.

5. Process for producing glass/plastic compounds according to one or more of Claims 1 to 4, **characterized in that**, in a first step, a master-batch with glass content of from 60 to 90% by weight is prepared from a sulphophosphate glass and a high-performance thermoplastic at from 320 to 420°C, and that, in a second step, the glass content is reduced to 15-80% by weight by adding further high-performance thermoplastic at elevated temperature.

6. Process according to Claim 5, **characterized in that** the temperature is from 320 to 420°C.

7. Process according to Claim 5 or 6, **characterized in that** use is made of glass particles with a diameter of ≤ 4 mm.

8. Use of the glass/plastic compounds according to one or more of Claims 1 to 4 in components or component parts for units.

9. Electrical and/or electronic component which encompasses a glass/plastic compound with a low-melting sulphophosphate glass of the following composition: from 4 to 10% of Li₂O, from 4 to 10% of Na₂O, from 4 to 8% of K₂O, from 1 to 2% of CaO, from 35 to 37% of ZnO, from 0 to 3% of La₂O₃, from 19 to 22% of P₂O₅, and from 19 to 22% of SO₃, and also encompassing a high-performance thermoplastic.

## Revendications

1. Composites verre/matière plastique à base de matières thermoplastiques, comprenant au moins :
- un verre au sulfophosphate avec une température de transition vitreuse T_{g} < environ 500°C de composition suivante : 4 à 10 % de Li₂O, 4 à 10 % de Na₂O, 4 à 8 % de K₂O, 1 à 2 % de CaO, 35 à 37 % de ZnO, 0 à 3 % de La₂O₃, 19 à 22 % de P₂O₅ et 19 à 22 % de SO₃ ainsi que
- une matière thermoplastique à haute performance, comme la polyétheréthercétone (PEEK), le polyétherimide (PEI), le sulfure de polyphénylène (PPS), le polyamide partiellement aromatique, un polymère à cristaux liquides (LCP), une polyaryléthercétone (PAEK), une polyéthercétone ou une polysulfone (PSU), une polyéthersulfone (PES) et une polyphénylsulfone (PPSU).

2. Composites verre/matière plastique selon la revendication 1, **caractérisés en ce qu'**ils contiennent un verre au sulfophosphate de composition suivante : 4,9 % de Li₂O, 9,4 % de Na₂O, 7,1 % de K₂O, 1,6 % de CaO, 36,6 % de ZnO, 20,0 % de P₂O₅ et 20,4 % de SO₃.

3. Composites verre/matière plastique selon la revendication 1 ou 2, **caractérisés en ce que** la matière thermoplastique à haute performance est une polyétheréthercétone, un polyétherimide, un sulfure de polyphénylène, un polyamide partiellement aromatique ou un polymère à cristaux liquides.

4. Composites verre/matière plastique selon l'une des revendications 1 à 3, **caractérisés en ce que** la proportion de verre au sulfophosphate est de 15 à 60 % en poids.

5. Procédé de production de composites verre/matière plastique selon une ou plusieurs des revendications 1 à 4, **caractérisé en ce que** dans une première étape on produit à partir d'un verre au sulfophosphate et d'une matière thermoplastique à haute performance entre 320°C et 420°C un lot directeur ayant une teneur en verre de 60 à 90 % en poids, et **en ce que** dans une seconde étape on diminue la teneur en verre par addition d'une quantité supplémentaire de matière thermoplastique à haute performance à une température augmentée à raison de 15 à 80 % en poids.

6. Procédé selon la revendication 5, **caractérisé en ce que** la température est de 320 à 420°C.

7. Procédé selon la revendication 5 ou 6, **caractérisé en ce qu'**on utilise des particules de verre ayant un diamètre ≤ 4 mm.

8. Utilisation des composites verre/matière plastique selon une ou plusieurs des revendications 1 à 4 dans des composants et des éléments de composants.

9. Composant électrique et/ou électronique qui comprend un composite verre/matière plastique avec un verre au sulfophosphate à bas point de fusion de composition : 4 à 10 % de Li₂O, 4 à 10 % de Na₂O, 4 à 8 % de K₂O, 1 à 2 % de CaO, 35 à 37 % de ZnO, 0 à 3 % de La₂O₃, 19 à 22 % de P₂O₅ et 19 à 22 % de SO₃ ainsi qu'une matière thermoplastique à haute performance.
